Europäisches Patentamt

European Patent Office

Office européen des brevets

(19)

(11) Numéro de publication : **0 519 825 A1**

# (12) DEMANDE DE BREVET EUROPEEN

(21) Numéro de dépôt : **92401699.1**

(22) Date de dépôt : **18.06.92**

(51) Int. Cl.⁵ : **B60G 3/26,** B60G 3/20

(30) Priorité : **18.06.91 FR 9107411**

(43) Date de publication de la demande :
**23.12.92 Bulletin 92/52**

(84) Etats contractants désignés :
**DE ES GB IT**

(71) Demandeur : **REGIE NATIONALE DES USINES RENAULT S.A.
34, Quai du Point du Jour
F-92109 Boulogne Billancourt (FR)**

(72) Inventeur : **Veneau, Jean
21, Domaine de la Côte Noire
F-92500 Rueil-Malmaison (FR)**

(54) **Demi-train de suspension de roue à triangles superposés.**

(57)    Demi-train de suspension de roue à triangles superposés comportant un porte-fusée (2) recevant la fusée (14) sur laquelle sont montés le porte-moyeu (15) et les organes de freinage (15'), un triangle supérieur (3) de liaison latérale dont la base EL est articulée sur le châssis et dont le sommet F est articulé sur le porte-fusée (2), un triangle inférieur (4) de liaison latérale, ainsi qu'un amortisseur (18) et un ressort (17) assurant la liaison verticale avec le châssis, caractérisé en ce que le porte-fusée (2) est en outre relié latéralement au châssis par un bras porteur (12) supportant le ressort (17) et l'amortisseur (18), et en ce que la base CD du triangle inférieur (4) est articulée sur le porte-fusée (2)

FIG.7

La présente invention se rapporte au domaine technique des suspensions de véhicule dites à "double triangle" ou à "triangles superposés". Elle s'applique en particulier à un demi-train de suspension de roue. Plus précisément, elle concerne la disposition géométrique des points de liaison entre le porte-fusée et le châssis, dans un demi-train de suspension de roue à triangles superposés.

Selon l'architecture classique d'une suspension à triangles superposés, telle qu'illustrée par la publication FR-2595995, la base de chaque triangle est reliée au châssis par une charnière tourillonnante, tandis que son sommet est fixé au porte-fusée par une rotule. Les oscillations de la caisse du véhicule par rapport à la roue sont absorbées par un amortisseur associé à un ressort portant la charge de celle-ci. L'amortisseur, orienté vers le haut, s'appuie sur un des deux triangles. Le guidage de la roue est généralement complété par une biellette de direction qui porte le système d'ajustement de la pince. Ce système peut par exemple se présenter sous la forme d'un manchon de réglage en longueur de la biellette. Le rôle de la biellette peut dans certains cas se limiter à imposer à la roue le réglage souhaité, effectué par ailleurs à l'aide d'un mécanisme à excentrique.

Cette architecture nécessite, pour assurer un maintien suffisant du plan de la roue, que les charnières d'articulation des triangles sur le châssis soient les plus longues possible. Cette disposition permet de réduire efficacement les efforts de liaison de la roue avec le châssis et de diminuer les déplacements internes perturbateurs des articulations élastiques. Elle est impérative pour le triangle inférieur, car ce dernier est toujours plus sollicité que le triangle supérieur par les efforts mécaniques transmis au train de suspension lors du freinage.

L'examen du comportement des suspensions à triangles superposés classiques met en évidence que la cinématique et les réactions élastiques de celles-ci ne peuvent être bien maîtrisées si la barre transversale, ou biellette de direction, n'est pas connectée au porte-fusée et au châssis. Cette connexion supplémentaire du porte-fusée avec le châssis a pour inconvénient de porter à cinq (deux par triangle et un pour la biellette de direction) le nombre des points de fixation côté châssis. Or, l'augmentation du nombre des points de fixation complique l'agencement de l'ensemble des noeuds de connexion qui doivent coexister sous le plancher arrière du véhicule, dans un espace déjà très encombré par des organes tels que l'échappement, le réservoir, la roue de secours, etc...

Au regard de l'ensemble des contraintes qui viennent d'être évoquées, l'invention propose une architecture rationnelle basée sur la disposition judicieuse des organes de liaison entre le porte fusée et le châssis.

L'invention concerne un demi-train de suspension de roues à triangles superposés comportant un porte-fusée recevant la fusée, sur laquelle sont montés le porte-moyeu et les organes de freinage, un triangle supérieur de liaison latérale dont la base est articulée sur le châssis et dont le sommet est articulée sur le porte-fusée, un triangle inférieur de liaison latérale, ainsi qu'un amortisseur et un ressort assurant la liaison verticale avec le châssis. Ce demi-train de suspension est caractérisé en ce que le porte-fusée est en outre relié latéralement au châssis par un bras porteur supportant le ressort et l'amortisseur, et en ce que la base du triangle inférieur est articulée sur le porte-fusée.

Selon un mode de réalisation de l'invention, le point d'articulation du triangle supérieur sur le porte-fusée est constitué par une rotule.

Selon un mode de réalisation de l'invention, le point d'articulation du triangle supérieur sur le porte-fusée est dédoublé en deux points d'articulation distincts.

Selon un mode de réalisation de l'invention, le point de fixation du triangle inférieur sur le châssis est déporté vers l'avant du véhicule par rapport à l'axe du porte-fusée, de façon à imposer à la roue le pincement élastique souhaité lors du freinage.

Selon un mode de réalisation de l'invention, le point de fixation du bras porteur sur le châssis est déporté vers l'arrière du véhicule par rapport à son point d'ancrage sur le porte-fusée.

Selon un mode de réalisation de l'invention, la rotule de liaison du triangle supérieur au porte-fusée est décalée vers l'avant du véhicule par rapport au centre de son axe d'articulation sur le châssis.

Selon un mode de réalisation de l'invention, le porte fusée peut coulisser lors du freinage, le long de son axe d'articulation sur le triangle inférieur et pivoter progressivement autour du point d'ancrage avant grâce à la non linéarité des articulations.

Selon un mode de réalisation de l'invention, les points d'articulation du triangle supérieur, côté châssis, sont constitués par des coussinets élastiques de faible raideur axiale avec butées.

Selon un mode de réalisation de l'invention, l'effort de freinage s'exerçant sur la roue à son point de contact avec le sol, se traduit par un pivotement du porte-fusée dans le sens d'une augmentation de la pince de la roue, autour d'un axe de pivot passant par le point d'articulation du triangle supérieur sur le porte-fusée et par le point d'intersection du prolongement vers l'extérieur du bras porteur et de la droite joignant le point d'articulation du triangle inférieur côté châssis au point d'articulation avant du triangle inférieur, côté porte-fusée.

Selon un mode de réalisation de l'invention, le point d'intersection de l'axe de pivotement du porte-fusée, avec le plan du sol est déporté en arrière de l'axe du porte-fusée et à l'extérieur de la voie.

Selon un mode de réalisation de l'invention, le ripage latéral du véhicule se traduit par un pivotement du porte-fusée dans le sens du pincement de la roue.

L'invention sera mieux comprise à la lecture de la description suivante d'un mode de réalisation particulier, en liaison avec les dessins annexés sur lesquels :

- les figures 1, 2 et 3 illustrent de façon schématique l'implantation des organes de liaison d'un demi-train de suspension à triangles superposés classique.
- la figure 4 met en évidence les forces transmises lors du freinage à un demi-train de suspension correspondant à la figure 1.
- les figures 5 et 6 sont des schémas simplifiés de demi-trains de suspension conformes à l'invention.
- la figure 7 représente de façon plus détaillée l'application de l'invention à un demi-train de suspension arrière.
- les figures 8 et 9 illustrent le comportement de ce demi-train de suspension lors du freinage.

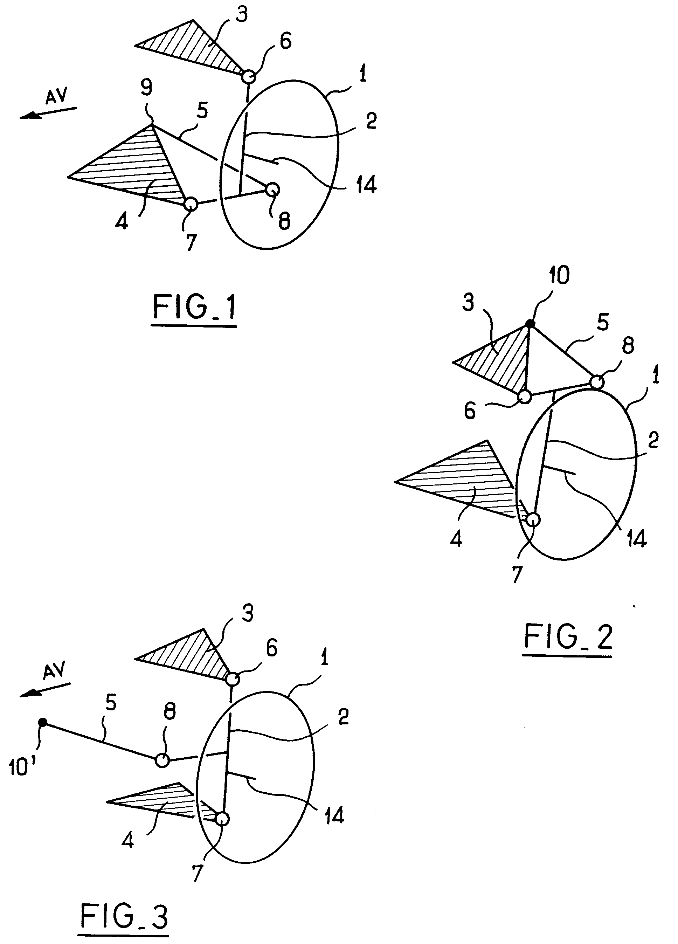

Sur les figures 1, 2, 3 et 4, on a fait apparaître uniquement la roue 1, le porte-fusée 2, la fusée 14, le triangle supérieur 3, le triangle inférieur 4, la biellette de direction 5 et les points d'articulation respectifs 6, 7, 8 du triangle supérieur 3, du triangle inférieur 4, et de la biellette 5 côté roue. Les figures 1, 2 et 3 prévoient trois points de fixation possibles pour la biellette 5 sur le châssis, à savoir un sommet 9 du triangle inférieur 4 (figure 1) un sommet 10 du triangle supérieur 3 (figure 2) et un point intermédiaire 10' du châssis (figure 3).

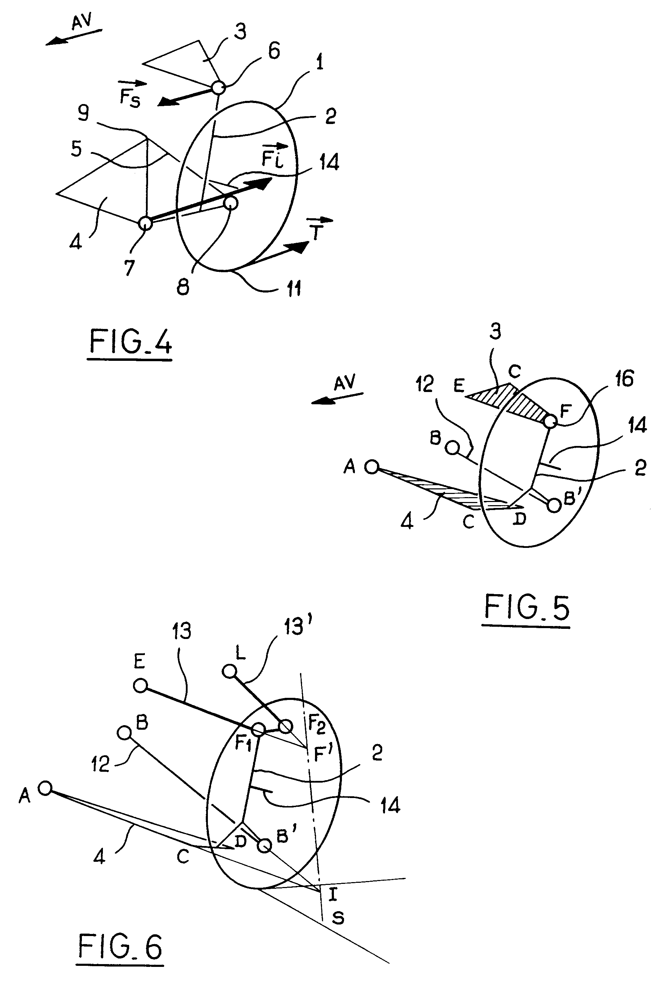

La figure 4 met en évidence que lors du freinage, la force de traction T exercée vers l'arrière sur la roue 1 à son point de contact 11 avec le sol, se traduit par des efforts inégaux $F_s$ et $F_i$ sur les points de liaison 6, 7 respectifs du triangle supérieur 3 et du triangle inférieur 4 sur le porte-fusée 2. La sollicitation beaucoup plus importante $F_i$ du triangle inférieur 4 s'explique par des raisons mécaniques évidentes, tenant à la cohésion de l'ensemble, et à l'annulation des moments de signes opposés appliqués aux points de liaison 6, 7, avec des bras de levier différents.

Sur la figure 5, on a représenté schématiquement une application de l'invention à un demi-train de suspension, selon laquelle le triangle inférieur 4 est inversé par rapport au triangle supérieur 3, si bien qu'il présente deux points d'articulation C D au lieu d'un sur le porte fusée 2 et un seul point de liaison A au lieu des deux sur le châssis. Le demi-train de suspension représenté comporte en outre un bras porteur 12 assurant une liaison articulée supplémentaire entre le châssis et le porte-fusée 2. Par contre, il ne comporte plus de biellette de direction.

La variante de la figure 6 propose de dédoubler le point de liaison du triangle sur le porte-fusée 2 en deux points de liaison distincts $F_1$, $F_2$. Le triangle supérieur est alors remplacé par un couple de biellettes convergant 13, 13' à l'extérieur ou à l'intérieur de la voie au point F'. Cette disposition présente des avantages particuliers qui seront explicités plus loin.

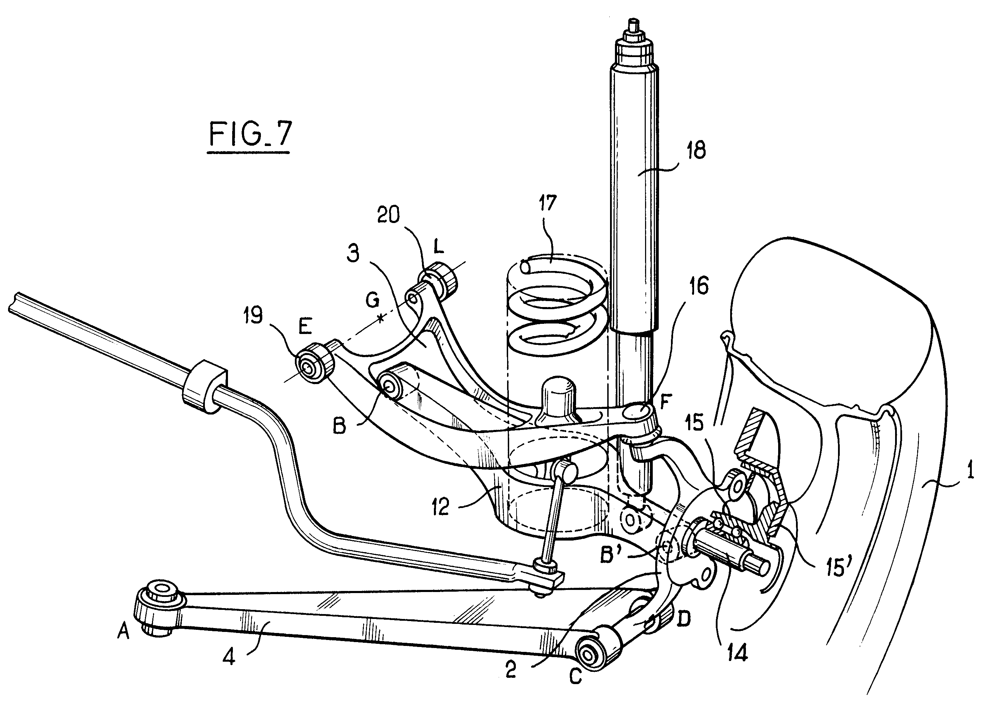

Le demi-train de suspension arrière représenté sur la figure 7 comporte un porte-fusée 2, supportant la fusée 14 sur laquelle sont montés le moyeu 15 de la roue 1, et les organes de freinage 15'. Les éléments de liaison du porte-fusée 2 sur le châssis sont constitués par le triangle supérieur 3, le bras porteur 12 et le triangle inférieur 4. Le triangle supérieur 3 est relié au châssis en deux points distincts E, L définissant un axe d'articulation E, L. Côté porte-fusée 2, la liaison est assurée par une rotule 16 au point F. Le triangle inférieur 4 est inversé par rapport au triangle supérieur 3, si bien qu'on trouve un axe d'articulation C, D, du côté du porte-fusée 2, et le sommet A du triangle 4 sur le châssis. Le troisième organe de liaison, à savoir le bras porteur 12 est articulé au point B sur le châssis, et au point B' sur le porte-fusée 2. Ce bras porteur 12 supporte le ressort 17 et l'amortisseur 18 qui s'étendent vers le haut, et sont respectivement en appui à leur extrémité supérieure contre un longeron et le passage de roue, non représentés sur cette figure. De même que sur la figure 6, ce demi-train de suspension ne présente pas de biellette de direction.

La structure qui vient d'être décrite présente donc quatre points de liaison (A, B, E, L) côté châssis, dont deux (E, L) pour le triangle supérieur 3, un (B) pour le bras porteur 12 et un (A) pour le triangle inférieur 4. Côté porte-fusée 2, on trouve également quatre points de liaison, dont un (F) pour le triangle supérieur 3, un (B') pour le bras porteur 12, et deux (C, D) pour le triangle inférieur 4. Il en résulte la possibilité d'obtenir une implantation espacée des points de liaison inférieurs (A, B) (par exemple 500 mm) sur le châssis, sans recourir pour cela à l'utilisation d'un triangle présentant une base importante donc massif et lourd. En effet, la liaison "triangulaire" est assurée par la barre porteuse 12 et le triangle 4 inférieur en tant qu'unité de liaison, dont les points de liaison respectifs A et B sur le châssis sont très espacés. L'invention permet ainsi de réaliser une économie importante en poids et en coût pour le véhicule. Sur la figure 7 on peut également observer que le point de fixation A du triangle inférieur 4 sur le châssis est déporté vers l'avant par rapport à l'axe du porte-fusée 2. Ce déport est déterminé de façon à imposer à la roue 1 la pince souhaitée. Le réglage initial de la pince est obtenu par blocage en position du point A dans une lumière non représentée sur les schémas.

Par ailleurs, il faut noter que le point de fixation B du bras porteur 12 au châssis est déporté vers l'arrière du véhicule par rapport à son point d'ancrage B' sur le porte-fusée 2, et que la rotule 16 de liaison du triangle supérieur 3 au porte-fusée 2 est décalée vers l'avant par rapport au centre G de son axe d'articulation E L sur le châssis.

Côté châssis, l'axe d'articulation E L du triangle supérieur 3 peut par exemple être fixé au longeron de la structure arrière du soubassement (non représenté), dans sa partie descendante vers le bavolet. Les points de liaison du bras porteur des demi-trains droit et gauche seront avantageusement assemblés sur une traverse (non représentée) qui se raccorde latéralement aux longerons (non représentés). Cette traverse peut également accueillir les appuis de ressort. Enfin, on peut envisager de réunir les quatre points de liaison côté châssis A, B, E, L en un berceau commun en tôle soudé (non représenté) assemblé par exemple au châssis par quatre plots verticaux munis d'articulations élastiques filtrant les vibrations.

Le demi-train de suspension conforme à l'invention répond à un objectif d'optimisation de la cinématique et des réactions élastiques sous les efforts auxquels elle est soumise. Cette structure assure entre autres un comportement sous-vireur sous effort transversal et une tendance à l'augmentation de la pince lors du freinage. Ces deux qualités améliorent considérablement la stabilité du véhicule.

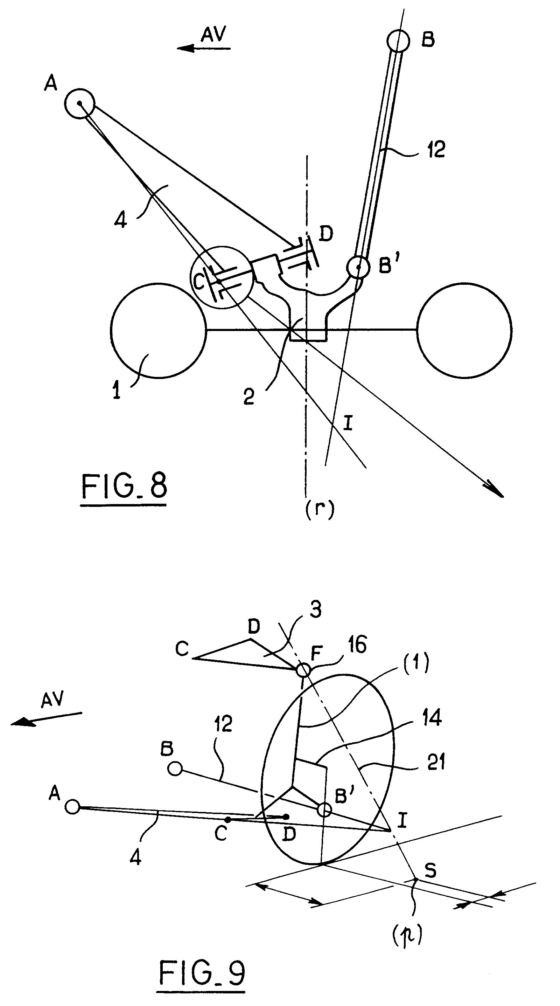

Lors du freinage, nous avons vu (cf figure 4) que l'effort de freinage au pied 11 de la roue 1 se transforme dans toutes les suspensions à double triangle, en un effort supérieur sur la triangulation inférieure, dirigé vers l'arrière. Pour reprendre cet effort et provoquer élastiquement l'effet de pince souhaité, le demi-train de suspension de l'invention bénéficie de l'effet de bielle du bras porteur 12 associé à la possibilité de coulissement du porte-fusée 2 par rapport au triangle inférieur suivant leur axe d'articulation commun CD, illustrée par la figure 8. Ce coulissement est associé à un mouvement de pivotement progressif autour du point C grâce à la non linéarité des articulations.

De plus, le recul de la roue 1, indispensable pour permettre le braquage nécessaire à l'augmentation de la pince, est facilité par le déplacement vers l'avant de la rotule 16 du triangle supérieur 3, dû à la faible raideur axiale des coussinets élastiques 19, 20 avec butées, constituant ses points de fixation E et L sur le châssis. Cette souplesse autorise un effet de butée axiale non linéaire sur le point d'articulation avant C du triangle inférieur 4 sur la fusée 2, qui permet au centre élastique de rotation du triangle inférieur sur le porte-fusée de se déplacer vers le point d'articulation avant C.

La figure 8 met également en évidence que le centre de rotation I du porte-fusée 2 lors du freinage est situé à l'intersection du prolongement du bras porteur 12 vers l'extérieur, et de la droite A, C passant par le point de fixation A au châssis I du triangle inférieur 4 et son point d'articulation C avant sur le porte-fusée 2.

Sur la figure 9, on a représenté le point S de contact au sol de la droite IF joignant la rotule 16 du triangle supérieur 3 et le centre de rotation I du porte-fusée 2. Cette droite IF représente l'axe de pivotement virtuel instantané de la roue lors du freinage. Le point I est déporté vers l'arrière par rapport à la projection (p) de l'axe de la roue sur le sol et à l'extérieur de la voie. On comprend aisément que tout recul de la roue 1 lors du freinage, se traduira par un effet de pincement sur la roue 1.

L'axe du pivot IF virtuel instantané du porte-fusée et de la roue étant, comme on l'a vu, rejeté en arrière de l'axe R de la roue 1 et du porte-fusée 2, si le véhicule est inscrit dans une courbe, l'effort transversal proportionnel à l'accélération transversale se traduira pour la roue 1 par un moment autour de l'axe virtuel de pivotement IF, de même signe que dans le cas du freinage. La variation d'attitude de la roue lors du ripage du véhicule correspondra donc également à une augmentation de sa pince.

La variante de la figure 6, selon laquelle le triangle supérieur 3 est remplacé par un couple de biellettes convergentes 13, 13′ permet de redresser l'axe de pivotement de la roue IF′, par rapport au mode de réalisation précédent. Cette disposition peut dans certains cas, tels que l'adoption d'une forte motorisation, être d'une grande utilité pour la maîtrise des braquages induits par la propulsion

On sait en effet qu'à l'accélération, les efforts transmis à la suspension se traduisent par un moment opposé à celui du freinage, qui entraîne un braquage des roues dans le sens de l'ouverture, donc opposé au pincement. Le redressement de l'axe de pivotement du plan de roue obtenu selon cette variante de l'invention, assure d'excellents résultats à cet égard.

## Revendications

1°) Demi-train de suspension de roue à triangles superposés comportant un porte-fusée (2) recevant la fusée (14) sur laquelle sont montés le porte-moyeu (15) et les organes de freinage (15′), un triangle supérieur (3) de liaison latérale dont la base EL est articulée sur le châssis et dont le sommet F est articulé sur le porte-fusée (2), un triangle inférieur (4) de liaison latérale, ainsi qu'un amortisseur (18) et un ressort (17) assurant la liaison verticale avec le châssis, caractérisé en ce que le porte-fusée (2) est en outre relié latéralement au châssis par un bras porteur (12) supportant le ressort (17) et l'amortisseur (18), et en ce que la base CD du triangle inférieur (4) est articulée sur le porte-fusée (2)

2°) Demi-train de suspension selon la revendication 1, caractérisé en ce que le point d'articulation F du triangle supérieur (3) sur le porte-fusée est constitué par une rotule (16).

3°) Demi-train de suspension selon la revendication 1, caractérisé en ce que le point d'articulation F du triangle supérieur B sur le porte-fusée (2) est dédoublé en deux points d'articulation distincts $F_1$, $F_2$.

4°) Demi-train de suspension selon l'une des revendications 1, 2 ou 3, caractérisé en ce que le point de fixation A du triangle inférieur (4) sur le châssis est déporté vers l'avant du véhicule par rapport à l'axe du porte-fusée (2) de façon à imposer à la roue (1) le pincement élastique souhaité lors du freinage.

5°) Demi-train de suspension selon l'une quelconque des revendications précédentes, caractérisé en ce que le point de fixation B′ du bras porteur (12) sur le châssis est déporté vers l'arrière du véhicule par rapport à son point d'ancrage B sur le porte-fusée (2).

6°) Demi-train de suspension selon l'une quelconque des revendications 1, 3, 4 ou 5, caractérisé en ce que la rotule (16) de liaison du triangle supérieur au porte-fusée (2) est décalée vers l'avant du véhicule par rapport au centre G de son axe d'articulation EL sur le châssis.

7°) Demi-train de suspension selon l'une quelconque des revendications précédentes, caractérisé en ce que, lors du freinage, le porte-fusée (2) peut coulisser le long de son axe d'articulation CD sur le triangle inférieur (4) et pivoter progressivement autour du point C grâce à la non linéarité des articulations.

8°) Demi-train de suspension selon l'une quelconque des revendications précédentes, caractérisé en ce que les points d'articulation EL du triangle supérieur (3) côté châssis, sont constitués par des coussinets élastiques (19, 20) avec butées, de faible raideur axiale.

9°) Demi-train de suspension selon les revendications 7 et 8, caractérisé en ce que l'effort de freinage s'exerçant sur la roue (1) à son point de contact (11) avec le sol se traduit par un pivotement du porte-fusée (2) dans le sens d'une augmentation de la pince de la roue, autour d'un axe de pivot IF passant par le point d'articulation F du triangle supérieur (3) sur le porte-fusée (2) et par le point d'intersection I du prolongement vers l'extérieur B, B′ du bras porteur (12) et de la droite AC joignant le point d'articulation A du triangle inférieur (4) côté châssis au point d'articulation avant C du triangle inférieur (4) sur le porte-fusée (2).

10°) Demi-train de suspension selon l'une des revendications 9, 8, caractérisé en ce que le point d'intersection (11) de l'axe de pivotement IF du porte-fusée (2) avec le plan du sol est déporté en arrière de l'axe (r) du porte-fusée (2) et à l'extérieur de la voie.

11°) Demi-train de suspension selon l'une des revendications 9 ou 10, caractérisé en ce que le ripage latéral du véhicule se traduit par un pivotement du porte-fusée (2) dans le sens de l'augmentation de la pince.

FIG_1

FIG_2

FIG_3

FIG.4

FIG.5

FIG.6

FIG.7

AV

A

4

D

B

12

C

B'

1

2

I

FIG. 8

(r)

3

D

C

F

16

(1)

AV

12

14

B

21

A

B'

4

C

D

I

S

(↥)

FIG. 9

Office européen
des brevets

**RAPPORT DE RECHERCHE EUROPEENNE**

Numero de la demande

EP    92 40 1699

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 199 915 (PORSCHE)<br><br>* colonne 3, ligne 13 - ligne 52; figures 1-6 *<br>--- | 1,3-5,<br>7-11 | B60G3/26<br>B60G3/20 |
| A | US-A-3 189 118 (ARNING)<br>* figures 1-3 *<br>--- | 1,2,6 | |
| A | EP-A-0 316 711 (DAIMLER-BENZ)<br>* colonne 4, ligne 52 - ligne 55; figures 1-3 *<br>--- | 1,3,5 | |
| A | DE-A-2 818 198 (BMW)<br><br>* page 5, ligne 19 - ligne 30; figures 1-3 *<br>--- | 1,4,5,9,<br>11 | |
| A | EP-A-0 339 479 (TOYOTA)<br>* figures 1,3 *<br>--- | 1,4,5 | |
| A | GB-A-2 089 742 (DAIMLER-BENZ)<br>* page 2, ligne 80 - page 3, ligne 83; figure 3 *<br>--- | 8 | **DOMAINES TECHNIQUES RECHERCHES (Int. Cl.5 )**<br><br>B60G |
| A | DE-A-3 826 930 (HONDA)<br>* colonne 8, ligne 64 - colonne 9, ligne 16; figure 1 *<br>--- | 8 | |
| A | PATENT ABSTRACTS OF JAPAN<br>vol. 11, no. 327 (M-635)(2774) 24 Octobre 1987<br>& JP-A-62 110 507 ( HONDA ) 21 Mai 1987<br>* abrégé *<br>--- | 1,2 | |
| A,D | EP-A-0 239 449 (PEUGEOT-CITROEN)<br>& FR-A-2 595 995<br><br>----- | | |

Le présent rapport a été établi pour toutes les revendications

| Lieu de la recherche | Date d'achèvement de la recherche | Examinateur |
|---|---|---|
| LA HAYE | 01 OCTOBRE 1992 | TORSIUS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P0402)